Europäisches Patentamt

(19) European Patent Office

Office européen des brevets

(11) Publication number: **0 021 564**
**B1**

# (12) EUROPEAN PATENT SPECIFICATION

(45) Date of publication of patent specification: **25.05.83**

(51) Int. Cl.³: **B 29 D 27/04**

(21) Application number: **80301223.6**

(22) Date of filing: **14.04.80**

(54) Apparatus for the continuous manufacture of foam board.

(30) Priority: **31.05.79 GB 7918923**
**22.11.79 GB 7940419**

(43) Date of publication of application:
**07.01.81 Bulletin 81/1**

(45) Publication of the grant of the patent:
**25.05.83 Bulletin 83/21**

(84) Designated Contracting States:
**BE DE FR GB IT NL SE**

(56) References cited:
**DE - A - 1 923 531**
**GB - A - 1 075 401**
**US - A - 3 553 300**
**US - A - 3 562 767**
**US - A - 3 786 122**
**US - A - 4 108 585**

(73) Proprietor: **IMPERIAL CHEMICAL INDUSTRIES PLC**
**Imperial Chemical House Millbank**
**London SW1P 3JF (GB)**

(72) Inventor: **Walker, Brian James**
**Mount Pleasant The Yeld**
**Kelsall Nr. Tarporley, Cheshire (GB)**
Inventor: **Hodgson, Victor Francis**
**18 Beatrice Road**
**Worsley, Manchester M28 4TN (GB)**
Inventor: **Dockray, Edward**
**8 Caldy Drive Holcombe Brook**
**Bury, Greater Manchester, BL0 9TY (GB)**

(74) Representative: **Houghton, Malcolm John et al,**
**Imperial Chemical Industries PLC Legal**
**Department: Patents Thames House North**
**Millbank**
**London SW1P 4QG (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Apparatus for the continuous manufacture of foam board

This invention relates to the continuous manufacture of foam board of the type having a core of plastics foam, especially polyurethane or polyisocyanurate foam, sandwiched between two flexible facing sheets.

Machines suitable for the continuous manufacture of such boards are well known. An example is described in US—A—3 562 767. Generally they consist of a conveyor system for transporting two facing sheets fed from supply rolls through a series of operating stations to a point of delivery of a finished foam board, and a foam dispensing unit for applying a self-foaming plastics mixture to one or both facing sheets, normally the lower sheet. If the foam is deposited from a static dispenser a metering device comprising, for example, two closely spaced parallel plates or rollers, is usually provided to cause the facing sheets to converge into proximate relationship with the foam mix sandwiched between them, the mix being distributed across the width of the facing sheets as they converge and pass through the nip of the metering device. An expansion zone follows in which the foam is allowed to rise, usually under the accelerating influence of heat and usually under light pressure exerted on the upper sheet to prevent delamination caused by gas generated during foaming. After foaming is substantially complete the laminate is transported through a longitudinal gap formed between two spaced, parallel conveyors backed by platens where the foam is cured. On emerging from the gap the side edges of the laminate are trimmed and the laminate is cut into desired lengths.

Various modifications and auxiliary devices have been proposed and used over the years to improve the quality of the product and speed of production.

The present invention is concerned with the aspect of metering the foam mix and uniformly distributing it between the facing sheets. US—A—3 562 767 is also concerned with this aspect and describes a metering device which comprises two fixed spaced opposed smooth plates which form therebetween a metering gap for causing the facing sheets to converge into proximate relationship. The gap can be adjusted to meter and spread a quantity of foam mix over a uniform selected height appropriate to the thickness of board being made. Another kind of metering device, mentioned in US—A—3 562 767, comprises two closely spaced rollers. The surfaces of the plates and rollers are transversely straight and parallel giving a metering device which has a rectangular metering gap. In our experience we have found this type of metering device unsatisfactory because instead of giving parallel-faced boards as could be expected, in practice, the boards produced tend to be crowned.

According to the present invention we provide an apparatus for the continuous manufacture of foam board having a plastics foam core sandwiched between flexible facing sheets which comprises a conveyor assembly for continuously advancing upper and lower facing sheets in spaced opposed transversely-parallel disposition; a foam dispenser for depositing a liquid mixture of plastics foam-forming ingredients onto at least one of the facing sheets; a metering device comprising two spaced opposed foam-constricting members forming therebetween a metering gap for causing the facing sheets to converge into proximate relationship; and zones for the expansion and curing of the foam laminate; in which at least one of the foam-constricting members of the metering device has a variable profile such that the shape of the metering gap in the transverse direction can be variously defined.

While not wishing to be bound by any particular theory, it is believed that the crowning effect encountered with laminates made on previously known machines having parallel metering rollers is caused by pressure induced in the foam mix by the "nip" action of the facing sheets as they converge to pass through the metering rollers. This pressure is higher in the central portion of the laminate being formed causing more foam mix to pass through the centre of the metering gap than at the sides. Hence the foam core is thicker at the centre. To overcome this defect one or both of the metering rolls can be profiled to give a reduced gap in the centre to counteract the pressure effect. However the actual shape of the metering gap is likely to be different for each product thickness that is manufactured. It is an advantage of the present invention that it permits foam boards of different thicknesses to be made without having to change rollers.

In one aspect of our invention the profile of at least one of the foam constricting members is variable by virtue of the member being deformable in a controlled manner.

In one embodiment of this aspect of the present invention the foam-constricting members comprise a lower rigid roller and an upper resilient cylindrical steel bar which can be deformed by flexing in a controlled manner.

Controlled flexing may be achieved, for instance, by screw-jacks located along the length of the bar which act against a more rigid structure. In a preferred mechanism the bar is suspended from a series of screw assemblies which are attached to a substantial beam. Each screw assembly comprises a bolt having a first threaded section at one end which screws into the bar and a second threaded section towards the other end which turns in a collar fixed to the beam. The two threads are of the same hand but different pitch so that the bar moves relative to the beam as the bolts of the screw assemblies are turned. Appropriate adjustment enables the bar to be flexed to give the desired profile. Deformation of the bar may be measured, for example, by a series of dial gauges. If the pitches of the threads are only slightly different the bar can be adjusted finely. Adjustment of the metering gap without affecting the profile of the bar can be obtained by mounting the beam at each end on screw-jack assemblies or the like.

In another aspect of our invention the profile of at least one of the foam constricting members is variable by virtue of the member having a plurality of faces of different profile and being rotatable to present to the other member a selected face appropriate to the thickness of the foam board to be produced.

The multi-faced member conveniently takes the form of a steel bar which is rotatable about its longitudinal axis and is mounted with its axis transverse to the direction of advancement of the foam board, the bar having two and, preferably more, profiled faces. The bar may be, for example, of square, triangular, hexagonal or octagonal cross section. The profiled faces will normally be of a general convex shape longitudinally of the bar, the curvature of the profile varying from face to face to suit the thickness of foam board being produced.

Having selected a particular profiled face, the bar remains static in its operative position and co-acts with the other foam-constricting member to form a gap shape appropriate to the thickness of foam board being made. The bar is rotated about its axis only when a new profile is to be selected for producing a foam board of different thickness.

Usually the upper member only of the metering device will be deformable, multi-faced or otherwise of variable profile. The other, lower member may, for instance, be a cylindrical roller or cylindrical static bar although the bars need not necessarily be cylindrical or of steel. Bars of other curved cross-sections may equally be suitable as may other materials of construction. It is important only that the constricting members cannot be deformed significantly by pressure exerted by the foam mix and that the shape of the metering gap can be varied according to the thickness of the foam board to be produced to regulate the quantity of foam distributed across the width of the papers such that a product of the required profile is obtained and any unwanted crowning effect eliminated.

The lower member may also be profiled to overcome a further problem, namely thinning of the foam board close to the edges of the board which is additional to the crowning effect. Thus the lower metering member, if it is cylindrical, may have its diameter reduced near its end to increase the amount of foam mix layed down in these regions.

Furthermore, the lower member may be deformable or itself have a plurality of faces of different profile to cater for different degrees of thinning at the edges of the foam board to be produced. Except for the actual profiles of the faces in the case of the multi-faced member, it may be of a type similar to that hereinbefore described for the upper member.

To protect one or both of the constricting members against excessive wear and to keep their surfaces clean they may be covered with a thin robust film. The film should be smooth and of even thickness; it should be reasonably strong and have reasonable wear properties. Frictional properties are not crucial although a high friction coefficient could give rise to difficulties. "Melinex" (Registered Trade Mark) polyester film has been found suitable. When used to cover a static member it is desirable to index the film, i.e. present fresh surfacs to the member and facing sheet periodically, for example, every 15 to 20 minutes. This can be done by mounting a roll of the film on a shaft fitted with an indexing device which is periodically operated while the machine is running to allow a short length of 2 to 3 cm to be drawn through the metering gap in register with the contigous facing sheet. A take-up reel driven by a small air motor can provide the necessary torque to keep the film reasonably taut.

The extent to which the constricting member or members need to be deformed or otherwise profiled depends on a number of factors. When two parallel rigid metering rollers set at a gap of about 1.3 mm are used to make 1.2 m wide board using 0.27 mm thick paper facing sheets, a polyurethane foam board typically has been found to show a 7% reduction in thickness at 30 cm from the central crown and 16% at 50 cm from the central crown. Thus, bearing in mind that the foam-mix expands thirty to fortyfold, the constricting members of the present invention will need to be deformed or otherwise profiled accordingly by narrowing the metering gap towards its centre.

However, other factors come into play. These include inter alia the inclination of any supporting platens anterior to the foam-constricting members and the thickness of foam board to be produced.

Preferably upper and lower right platens, acutely angled to each other in a longitudinal direction, and anterior to the foam-constricting members, form part of the metering device to support the converging facing sheets and assist in spreading a bank of deposited foam mix across the width of the sheets. The inclination of these supporting platens will normally be adjustable to an angle of less than 10°. The actual angle at which the platens are set will depend on the foam ingredients used. For example, we have found that with certain polyurethane foams an angle of 5 to 6° is optimum and with certain isocyanurate foams $2\frac{1}{2}°$. Conveniently in-feed rollers are mounted in front of the platens to take the facing sheets across the platen surfaces. In practice, the surfaces of the platens are parallel to but slightly distanced (by about 1 mm) behind the imaginary tangential lines joining the respective in-feed rollers and metering members. This is to ensure that the facing sheets are maintained in full contact with the metering members so as not to distort the metering gap. It is especially important where the facing sheets converge at relatively small angles and protrusion of a platen beyond a tangential line could prevent contact of one of the facing sheets with its metering member. To keep the facing sheets flat and free from folds and wrinkles the platens are foraminated and connected to a 'vacuum' supply.

Ideally the platens support the facing sheets as close as possible up to the metering gap otherwise the presure of the foam-mix may cause the facing sheets to bulge in unsupported areas. Variations in paper tension caused thereby can influence the liquid pressure immediately before the metering gap resulting in foam thickness variations and unstable operating conditions.

The volume of foam-mix which forms in a bank before the metering gap is governed by the inclination of the supporting platens, the volume of the bank being smaller as the platens are more acutely angled. An advantage of using a small angle is that there is less risk of foam starting to react or "cream" before it has passed through the metering gap. Creaming is to be avoided as it reduces the density of the foam-mix resulting in laminates with a deficiency of foam at the edges. However, a disadvantage of the small angle is that the crowning effect is accentuated. The more acutely inclined the supporting platens, the greater the pressure incuded at the centre of the nip (presumably since it becomes more difficult for the foam mix to move laterally) and the greater the crowning effect. While the present invention overcomes the crowning effect, in practice, the angle at which the supporting platens are set is a compromise; being the largest angle at which creaming is avoided with a particular foam system.

Advantageously, one or both of the supporting platens are shaped across their width so that their surfaces are farthest apart at the centre, becoming closer towards the edges. This has the effect of reducing the pressure differential of the foam-mix across the width and assists the profiled member or members in eliminating the crowning effect. Suitably both platens are bowed so that transversely the space between them has a barrel-shaped profile. Shaping the leading edges of the supporting platens has the most telling effect.

For the manufacture of very thin boards the use of bowed platens may be sufficient to eliminate the crowning effect with the deformable or multi-faced member presenting a longitudinally parallel face to the lower member.

Other features of the apparatus may be those conventionally used on machines for the continuous manufacture of foam boards. Thus, for example, the laminating machine described in the article entitled "A New Development Machine for the Continuous Lamination of Rigid Urethane Foam" published in Rubber and Plastic Age, Volume 47 (1966), No. 1, page 57 may be modified to incorporate the metering device of the present invention which will normally be used in conjunction with one or more static dispensers replacing the more cumbersome and, in many ways, the operationally and environmentally less attractive reciprocating spray head. We have found that for, at least, 1.2 m wide foam board three static heads placed symmetrically across the width of the lower supporting platen or lay-down table enables a satisfactory product to be obtained.

The expansion zone, which may be a heated chamber, is usefully provided with one or more longtudinally flexible belts or drapes for maintaining a light pressure on the top surface of the laminate during foam rise.

The favoured curing zone is described in more detail in our British Patent Specification No. 1075401 in which a "floating-platen" exerts a predetermined constant pressure on the foam core during the curing period.

One advantage of the present invention is that foam board can be made at higher speed and with less contamination than a laminator equipped only with a transversely reicprocating spray head. Another advantage is that it provides a convenient way of obtaining foam board having parallel faces for different thicknesses of board. Yet another advantage is that foam-forming mixtures having a relatively short "cream-time" can be processed.

The foam boards of most interest to us have a rigid plastics foam core which may be formed from any suitable plastics foam-forming composition. The invention may, however, have application to flexible foams. Of especial interest are form cores consisting of an isocyanate-based foam material. Suitable isocyanate-based foams include polyurethane foams obtained in known manner from a suitable mixture of polyurethane-forming ingredients such as polyesters or polyethers and polyisocyanates with water, catalysts, surfactants, blowing agents and other ingredients. Suitable isocyanate-based foams also include polymeric foams containing an isocyanurate ring structure which may be obtained by treating an organic polyisocyanate with an isocyanate-polymerising catalyst, a blowing agent, and optionally, a deficiency, based on the isocyanate groups present, of an active hydrogencontaining compound. These foams and their method of preparation are well documented in the literature and are well known to the skilled worker in this field. The facing materials may be composed of continuous or semi-continuous lengths of any suitable material such as paper, plastics, metal, rubber or paperboard.

By way of illustration only a description of apparatuses and methods, which are embodiments of this invention, will now be given with reference to the accompanying drawings in which:

Figure 1 is a diagrammatic, side elevational view of part of a foam board production machine incorporating a deformable foam-constricting member as part of a foam metering device;

Figure 1(a) is a diagrammatic side, elevational view of a similar machine to that illustrated in Figure 1 except that it incorporates a multi-faced foam-constricting member instead of a deformable one;

Figure 2 is a diagrammatic plan view of part of either of the machines illustrated in Figures 1 and 1(a) showing the pattern of spreading of a foam-forming mixture used with the machine;

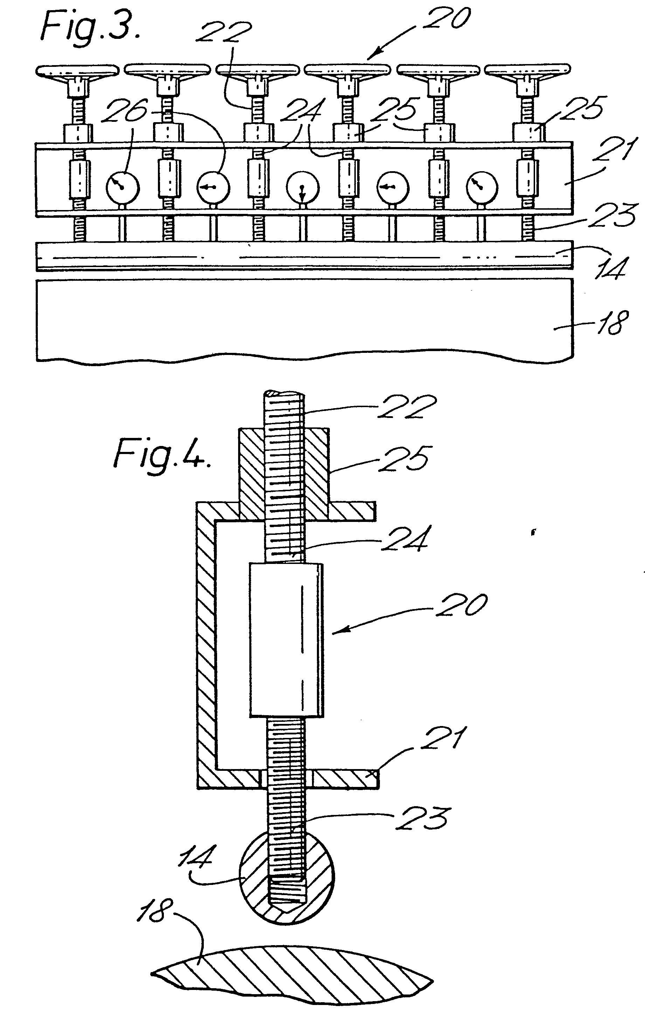

Figure 3 is a diagrammatic end elevational view of the foam metering device used on the machine illustrated in Figure 1;

Figure 4 is a diametral section of a detail from Figure 1 of the same metering device in side elevation;

Figure 5 is a diagrammatic and elevational view of the multi-faced foam constricting member used on the maching illustrated in Figure 1(a);

Figure 6 is a diagrammatic side elevational view of an auxiliary film-feeding device fitted to the machine illustrated in Figure 1;

Figure 6(a) is the same view of the device illustrated in Figure 6 but fitted to the machine illustrated in Figure 1(a); and

Figure 7 is an end elevational view of part of either of the metering devices of the machines illustrated in Figures 1 and 1(a) showing schematically the shape of the metering gap and of the leading edges of modified supporting platens.

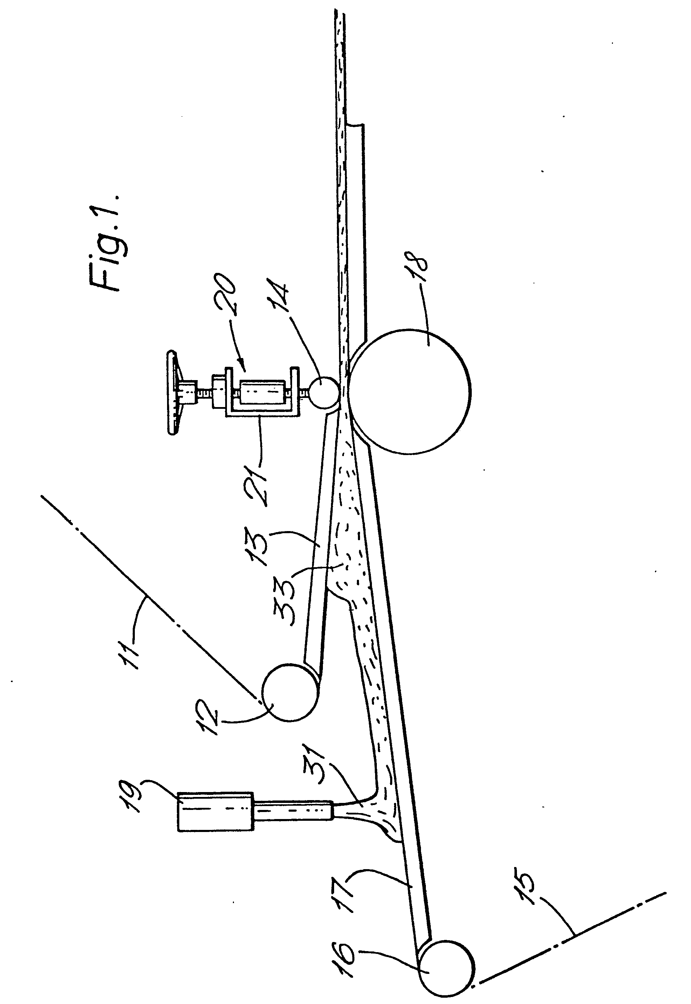

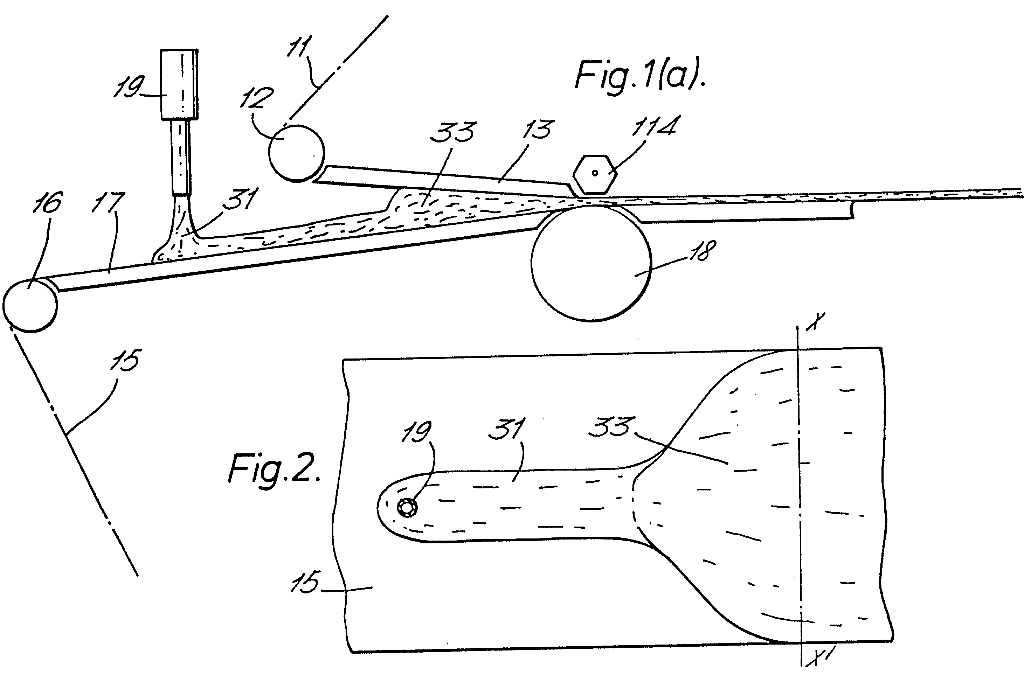

In the drawings, an upper paper facing sheet 11 fed from a first spool (not shown) passes around an in-feed roller 12, across a flat upper supporting platen 13 and under a first steel cylindrical bar 14 (in Figure 1) and a multi-faced steel bar 114 (in Figure 1(a)) before being transported by a conveyor assembly through expansion and curing zones (not shown). A lower paper facing sheet 15 fed from a second spool (not shown) passes around an in-feed roller 16, across a lower supporting platen 17, hereinafter referred to as a laydown table, and over a second steel cylindrical bar 18 of larger diameter than the first, before being transported with and in similar manner to the upper facing sheet. The platen 13 and laydown table 17 are foraminated and connected to a 'vacuum' source (not shown). Three static combined mixing heads and dispensers (only one of which, 19, is shown for simplicity) are positioned symmetrically across the width of the lower facing sheet and are connected to supplies of foam-forming ingredients (not shown).

The bar 14 (Figure 1) is suspended from a series of screw assemblies 20 attached to a rolled steel beam 21. The screw assemblies comprise a bolt 22 having a first threaded section 23 for screwing into the bar 14 and a second threaded section 24 for turning in a collar 25 integral with the beam 21. The two threads are of the same hand but of slightly different pitch; the first threaded section 23 having the shallower pitch. Dial gauges 26 measure the deflection of the bar 14. The beam 21 is mounted at each end on accurate screwjack assemblies (not shown).

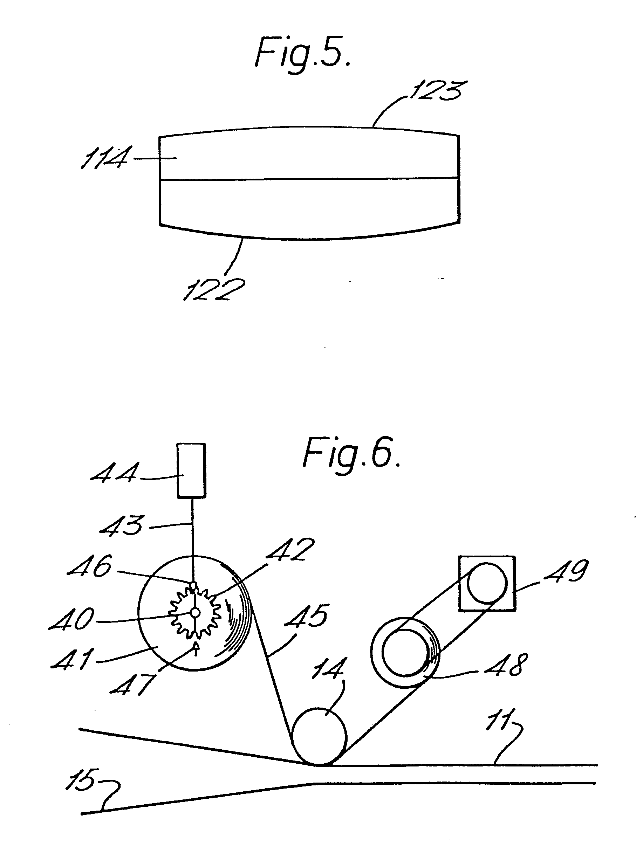

The bar 114 (Figure 1(a)) has a number of profiled faces which are generally convex in a longitudinal direction but each of different curvature. The profiles of two faces 122 and 123 are shown in Figure 5, their curvature being exaggerated to highlight their convex form. The bar is rotatable about its longitudinal axis and can be secured (by means not shown) so that any of its faces can be presented to the bar 18 and the profile of the metering gap fixed as desired for any particular production run.

In operation, a plastics foam-forming mixture, in this particular case a rigid polyurethane foam mix 31, is deposited from the dispensers 19 onto the advancing lower facing sheet 15. The simultaneously advancing facing sheet 11 is brought into contact with the foam mix which forms a bank 33 between the converging platens 13 and 17 and the bank of foam is spread across the width of the facing sheets in the pattern shown in Figure 2. In Figure 2, the line X—X' indicates the position of the metering gap. The angle of inclination of the laydown table and upper platen is adjusted by tilting either or both the table or upper platen (for small adjustments usually only the upper platen) to give the largest angle at which creaming of the foam mix is avoided.

In using the machine illustrated in Figure 1, the beam 21 having been raised or lowered to suit the particular thickness of foam board being made, the screw assemblies are individually adjusted to flex the steel bar 14 to obtain a foam board having parallel faces. Fine adjustments can be made during operation to allow for changing conditions. The deformation of the bar is measured on the dial gauges.

In using the machine illustrated in Figure 1(a), the bar 114 is rotated until the face appropriate to the thickness of laminate to be made is opposite the bar 18 and is then secured in position.

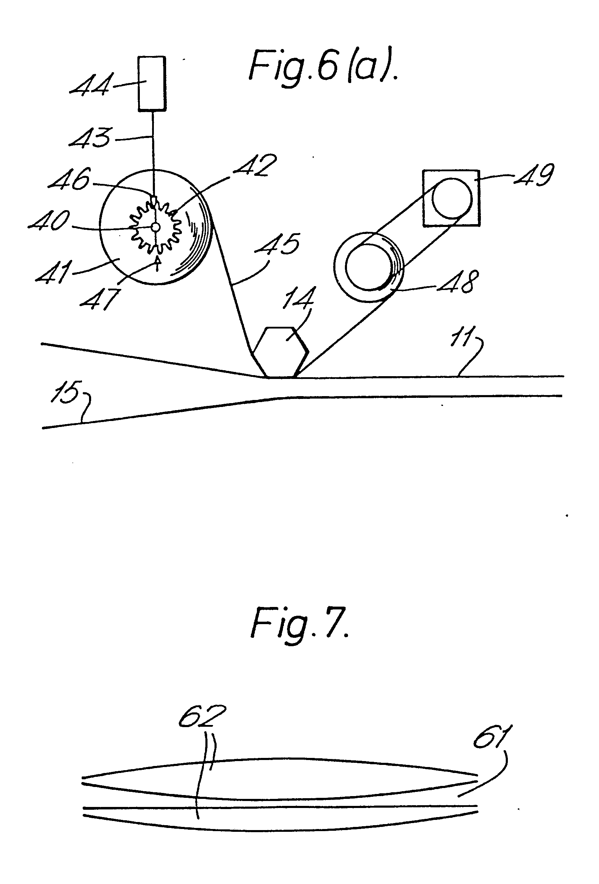

To protect one or more of the bars 14, 114 and 18 the bars may be covered with a thin film fed from an auxiliary device such as that shown in Figures 6 and 6(a).

In Figures 6 and 6(a), a web of "Melinex" (Registered Trade Mark) polyester film 45 is supplied from a feed roll 41 mounted on a shaft 40 which is provided at one end with an indexing mechanism comprising a gear wheel 42 having an odd number of teeth and pawls 46 and 47 mounted on a rod 43. The rod 43 is connected to a pneumatic cylinder 44 which is controlled by a timing circuit (not shown). A film take-up reel 48 is powered by an air motor 49.

In operation, the timing circuit is set to a desired time interval, say 15 to 20 minutes, at the end of which the pneumatic cylinder 44 actuates the rod 43 which disengages the pawl 46 from, and simultaneously engages the pawl 47 with, the gear wheel 42 allowing the feed roll 41 to rotate a few degrees on shaft 40. The roll rotates by virtue of the tension on the film 45 induced by the frictional drag of the facing sheet 11 at the point of contact with the bar 14 (in Figure 5) or bar 114 (in Figure 5(a)) and the torque on the take up reel 48 applied by air motor 49. Thus the film moves in register with the facing sheet to present a fresh surface for a further time interval.

In a modified machine, especially useful for making thin boards, upper platen 13 and laydown table 17 are transversely bowed. Figure 7 shows the gap 61 formed by either of the metering bars 14 and 114 and 18 and superimposed on the gap 62 formed by the leading edges of the upper platen and laydown table.

Commonly known modifications and refinements used on other continuous laminating machines may be incorporated, as appropriate, in the machine herein described.

**Claims**

1. Apparatus for the continuous manufacture of foam board having a plastics foam core sandwiched between flexible facing sheets which comprises a conveyor assembly for continuously advancing upper and lower facing sheets (11, 15) in spaced opposed transversely-parallel disposition; a foam dispenser (19) for depositing a liquid mixture (31) of plastics foam-forming ingredients onto at least one of the facing sheets; a metering device comprising two spaced opposed foam-constricting members (14/114, 18) forming therebetween a metering gap (61) for causing the facing sheets to converge into proximate relationship; and zones for the expansion and curing of the foam laminate; characterised in that at least one of the foam-constricting members of the metering device has a variable profile such that the shape of the metering gap in the transverse direction can be variously defined.

2. Apparatus as claimed in claim 1 in which the profile of at least one of the foam constricting members is variable by virtue of the member (14) being deformable in a controlled manner.

3. Apparatus as claimed in claim 1 in which the foam-constricting members comprise a lower rigid roller (18) and an upper resilient cylindrical steel bar (14) which can be deformed by flexing in a controlled manner.

4. Apparatus as claimed in claim 3 in which the steel bar is suspended from a series of screw assemblies (20) which are attached to a substantial beam (21), each screw assembly comprising a bolt (22) having a first threaded section (23) at one end which screws into the bar and a second threaded section (24) towards the other end which turns in a collar (25) fixed to the beam, the two threads being of the same hand but different pitch so that the bar moves relative to the beam as the bolts of the screw assemblies are turned.

5. Apparatus as claimed in claim 1 in which the profile of at least one of the foam constricting members is variable by virtue of the member (114) having a plurality of faces (122, 123) of different profile and being rotatable to present to the other member (18) a selected face appropriate to the thickness of the foam board to be produced.

6. Apparatus as claimed in claim 5 in which the member having a plurality of faces is a steel bar (114) which is rotatable about its longitudinal axis and is mounted with its axis transverse to the direction of advancement of the foam board.

7. Apparatus as claimed in any one of the preceding claims in which upper and lower rigid platens (13, 17), acutely angled to each other in a longitudinal direction, and anterior to the foam-constricting members, form part of the metering device to support the converging facing sheets and assist in spreading a bank (33) of deposited foam mix across the width of the sheets.

8. Apparatus as claimed in claim 7 in which the inclination of the supporting platens to each other is adjustable to an angle of less than 10°.

9. Apparatus as claimed in claims 7 or 8 in which one or both of the supporting platens are shaped across their width so that their surfaces are farthest apart at the centre, becoming closer towards the edges.

**Revendications**

1. Machine pour la fabrication en continu de plaques de mousse comportant une âme en mousse de matière plastique prise en sandwich entre des feuilles de parement flexibles qui comprend un transporteur destiné à faire avancer en continu des feuilles de parement supérieure et inférieure (11, 15) selon une disposition transversalement parallèle, opposée et espacée, un distributeur de mousse (19) pour déposer un mélange liquide (31) de matière plastique apte à former de la mousse sur au moins un des feuilles de parement, un dispositif de calibrage comprenant deux éléments d'étranglement de la mousse espacés et opposés (14/114, 18) formant entre eux un intervalle de calibrage (61) pour faire converger les feuilles de parement à proximité l'une de l'autre, et des zones pour l'expansion et le durcissement du stratifié en mousse, caractérisée en ce qu'au moins un des éléments d'étranglement de la mousse du dispositif de calibrage présente un profil variable tel que la forme de l'intervalle de calibrage puisse être définie de manière variable dans les sens transversal.

2. Machine suivant la revendication 1, caractérisée en ce que le profil d'au moins un des éléments d'étranglement de la mousse est variable par le fait que l'élément (14) peut être déformé d'une manière réglée.

3. Machine suivant la revendication 1, caractérisée en ce que les éléments d'étranglement de la mousse comprennent un rouleau rigide inférieur (18) et une barre d'acier cylindrique élastique supérieure (14) qui peut être déformée par flexion d'une manière réglée.

4. Machine suivant la revendication 3, caractérisée en ce que la barre d'acier est suspendue à une série de dispositifs à vis (20) qui sont attachés à une poutre robuste (21), chaque dispositif à vis comprenant une tige filetée (22) comprenant une première section filetée (23) à une extrémité qui se visse dans la barre et une seconde section filetée (24) vers l'autre extrémité qui tourne dans une bague (25) fixée à la poutre, les deux pas de vis s'enroulant dans le même sens, mais étant de pas différents de sorte que la barre se déplace par rapport la poutre lorsque les tiges filetées des dispositifs à vis tournent.

5. Machine suivant la revendication 1, caractérisée en ce que le profil d'au moins un des éléments d'étranglement de la mousse peut varier en raison du fait que l'élément (114) comporte plusieurs facettes (122, 123) de profils différents et peut tourner de manière à présenter à l'autre élément (18) une facette choisie appropriée à l'épaisseur de la plaque de mousse à produire.

6. Machine suivant la revendication 5, caractérisée en ce que l'élément comportant plusieurs facettes est une barre d'acier (114) qui peut tourner autour de son axe longitudinal et qui est montée avec son axe transversalement à la direction d'avancement de la plaque de mousse.

7. Machine suivant l'une quelconque des revendications précédentes, caractérisée en ce que les plateaux rigides supérieur et inférieur (13, 17), faisant un angle aigu l'un par rapport à l'autre dans un sens longitudinal et précédant les éléments d'étranglement de la mousse font partie du dispositif de calibrage pour supporter les feuilles de parement convergentes et aider à répartir une masse (33) de mélange déposée sur la largeur des feuilles.

8. Machine suivant la revendication 7, caractérisée en ce que l'inclinaison des plateaux de soutien l'une par rapport à l'ature peut être réglée jusqu'à un angle inférieur à 10°.

9. Machine suivant la revendication 7 ou 8, caractérisée en ce que l'un des plateaux de soutien ou les deux sont façonnés dans le sens de leur largeur de telle sorte que leurs surfaces soient davantage éloignées l'une de l'autre au milieu et se rapprochent l'une de l'autre vers leurs bords.

**Patentansprüche**

1. Vorrichtung zum kontinuierlichen Herstellen von Schaumstoffplatten, die einen schichtweise zwischen flexiblen Deckfolien bzw. -schichten angeordneten Schaumkunststoffkern aufweisen, mit

einer Fördereinrichtung für den kontinuierlichen Vorschub einer oberen und einer unteren Deckfolie bzw. -schicht (11, 15), wobei die Deckfolien bzw. -schichten mit Abstand voneinander gegenüberliegend und in Querrichtung parallel angeordnet sind,

einer Schaumzuführungseinrichtung (19) für das Auftragen bzw. Aufbringen einer flüssigen Mischung (31) schaumstoffbildender Bestandteile auf mindestens eine der Deckfolien bzw. -schichten,

einer Dosier- bzw. Zumeßeinrichtung, die zwei einander mit Abstand gegenüberliegende Schaumeinschnürelemente (14/114, 18), zwischen denen ein Dosier- bzw. Zumeßspalt (61) gebildet wird, aufweist und dazu dient, die Deckfolien bzw. -schichten unter Erzielung eines geringen Abstands voneinander zusammenlaufen zu lassen, und

Zonen für die Ausdehnung und Aushärtung des Schaumstoff-laminats,

dadurch gekennzeichnet, daß mindestens eines der Schaumeinschnürelemente der Dosier- bzw. Zumeßeinrichtung ein veränderliches Profil hat, so daß die Gestalt des Dosier- bzw. Zumeßspaltes in der Querrichtung in verschiedener Weise festgelegt werden kann.

2. Vorrichtung nach Anspruch 1, in der das Profil mindestens eines der Schaumeinschnürelemente aufgrund der Tatsache veränderlich ist, daß das Schaumeinschnürelement (14) in geregelter Weise verformt werden kann.

3. Vorrichtung nach Anspruch 1, in der die Schaumeinschnürelemente eine untere, starre Walze (18) und einen oberen, elastischen, zylindrischen Stahlstab (14), der durch Biegen in geregelter Weise verformt werden kann, enthalten.

4. Vorrichtung nach Anspruch 3, in der der Stahlstab an einer Reihe von Schraubeinrichtungen (20), die an einem stabilen bzw. standfesten Träger (21) angebracht sind, aufgehängt ist, wobei jede Schraubeinrichtung einen Bolzen (22) enthält, der an einem Ende einen ersten mit Gewinde versehenen, in den Stab einschraubbaren Abschnitt (23) und in Richtung auf das andere Ende einen zweiten mit Gewinde versehenen Abschnitt (24), der sich in einer an dem Träger befestigten Manschette (25) dreht, aufweist, wobei die zwei Gewinde den gleichen Verschraubungssinn, jedoch verschiedene Steigung haben, so daß sich der Stab in bezug auf den Träger bewegt, während die Bolzen der Schraubeinrichtungen gedreht werden.

5. Vorrichtung nach Anspruch 1, in der das Profil mindestens eines der Schaumeinschnürelemente aufgrund der Tatsache veränderlich ist, daß das Schaumeinschnürelement (114) mehr als eine Stirnfläche (122, 123) mit verschiedenem Profil aufweist und so gedreht werden kann, daß es dem anderen Schaumeinschnürelement (18) eine ausgewählte, zu der Dicke der herzustellenden Schaumstoffplatte passenden Stirnfläche zuwendet.

6. Vorrichtung nach Anspruch 5, in der das Schaumeinschnürelement, das mehr als eine Stirnfläche aufweist, ein Stahlstab (114) ist, der um seine Längsachse gedreht werden kann und so angebracht ist, daß seine Achse zu der Vorwärtsbewegungsrichtung der Schaumstoffplatte querlaufend ist.

7. Vorrichtung nach einem der vorhergehenden Ansprüche, in der eine obere und eine untere, starre bzw. steife Stützplatte (13, 17), die miteinander in einer Längsrichtung einen spitzen Winkel bilden und sich vor den Schaumeinschnürelementen befinden, einen Teil der Dosier- bzw. Zumeßeinrichtung bilde, um die zusammenlaufenden Deckolien bzw. -schichten abzustützen und das Ausbreiten einer aufgehäuften Masse bzw. Bank (33) der aufgebrachten Schaumstoffmischung über die Breite der Deckfolien bzw. -schichten zu unterstützen.

8. Vorrichtung nach Anspruch 7, in der die Neigung der Stützplatten gegeneinander auf einen Winkel von weniger als 10° eingestellt werden kann.

9. Vorrichtung nach Anspruch 7 oder 8, in der eine der Stützplatten oder beide Stützplatten über ihre Breite so geformt sind, daß ihre Oberflächen in der Mitte am weitesten voneinander entfernt sind und sich in Richtung auf die Ränder einander nähern.

*Fig.1.*

0 021 564

Fig.1(a).

Fig.2.

0 021 564

**Fig.3.**

**Fig.4.**

## Fig.5.

## Fig.6.

## Fig.6(a).

## Fig.7.